# EUROPEAN PATENT APPLICATION

(11) **EP 4 807 236 A1**
(43) Date of publication of application: **16.09.2026**
(21) Application number: 24808844.5
(22) Date of filing: 29.08.2024
(51) Int. Cl.: F17C 13/00, B01L 3/02, B67D 7/42, G01F 23/22

(54) **LIQUID INJECTION PIPE HEAD, AUTOMATIC FILLING DEVICE AND AUTOMATIC FILLING CONTAINER**

(30) Priority: 22.08.2024 CN 202411162977
(71) Applicant: Suzhou Basecare Medical Device Co., Ltd., Suzhou, Jiangsu 215000 (CN)
(72) Inventor: LI, Hao, Suzhou, Jiangsu 215000 (CN); LIANG, Bo, Suzhou, Jiangsu 215000 (CN)
(74) Representative: Buzzi, Notaro & Antonielli d'Oulx S.p.A.
(86) International application number: PCT/CN2024/115510
(87) International publication number: WO 2026/040120

(57) **Abstract**

Provided are a liquid injection tube head, an automatic injection device, and an automatic injection container. The liquid injection tube head includes a tube head body and a sensing assembly. The tube head body includes a liquid channel and a gas channel. A liquid outlet end of the tube head body is configured to be inserted into a container. The liquid channel extends along an axial direction of the tube head body and penetrates a liquid inlet end and the liquid outlet end of the tube head body. The gas channel includes a first gas channel and a second gas channel that are in communication with each other. An angle α between the first gas channel and the liquid channel is smaller than or equal to 90°. The port of the first gas channel communicates with a peripheral portion of the liquid channel. The second gas channel extends along the axial direction of the tube head body and penetrates the liquid outlet end of the tube head body. A guide groove extending along the axial direction of the tube head body is disposed on the second gas channel. The sensing assembly includes a sensing member slidably disposed in the guide groove and a sensor disposed on the tube head body.

## Description

This application claims priority to Chinese Patent Application No. 202411162977.3 filed with the China National Intellectual Property Administration (CNIPA) on Aug. 22, 2024, the disclosure of which is incorporated herein by reference in its entirety.

### TECHNICAL FIELD

The present application relates to the field of liquid nitrogen injection technology, for example, a liquid injection tube head, an automatic injection device, and an automatic injection container.

### BACKGROUND

With the rapid advancement of research methods such as genomics, transcriptomics, and proteomics, higher demands have been placed on the quality of biological samples for various analytical techniques. Due to the deep cryogenic nature (-196 °C) of liquid nitrogen, liquid nitrogen can effectively protect samples and enhance their viability. Therefore, liquid nitrogen, as a cost-effective cryogen, is widely used in biomedical research and clinical fields.

In related art, liquid nitrogen is usually stored in containers, and liquid nitrogen is generally injected into the containers either by manual pouring or through pipeline injection. However, both manual pouring and pipeline injection methods may result in liquid spillage from the containers, leading to waste of liquid nitrogen and posing safety risks, such as frostbite injuries.

### SUMMARY

The present application provides a liquid injection tube head that can prevent the occurrence of liquid spillage from a container.

The liquid injection tube head includes a tube head body and a sensing assembly.

The tube head body includes a liquid channel and a gas channel. A liquid outlet end of the tube head body is configured to be inserted into a container. The liquid channel extends along an axial direction of the tube head body and penetrates a liquid inlet end and the liquid outlet end of the tube head body. The gas channel includes a first gas channel and a second gas channel that are in communication with each other. An angle α between the first gas channel and the liquid channel is smaller than or equal to 90°. The port of the first gas channel communicates with a peripheral portion of the liquid channel. The second gas channel extends along the axial direction of the tube head body and penetrates the liquid outlet end of the tube head body. A guide groove extending along the axial direction of the tube head body is disposed on the second gas channel.

The sensing assembly includes a sensing member slidably disposed in the guide groove and a sensor disposed on the tube head body.

In the case where liquid is injected into the liquid channel and the liquid in the container does not cover the port of the second gas channel, gas in the gas channel flows from the port of the second gas channel toward the port of the first gas channel, and the flowing gas causes the sensor to sense the sensing member and emit a first signal.

In the case where liquid is injected into the liquid channel and the liquid in the container covers the port of the second gas channel, or when no liquid is injected into the liquid channel, the sensor is configured to sense the sensing member and emit a second signal.

Optionally, the liquid channel includes a first liquid channel and a second liquid channel sequentially from the liquid inlet end to the liquid outlet end, the cross section of the first liquid channel is greater than the cross section of the second liquid channel, and the port of the first gas channel communicates with a peripheral portion of the second liquid channel.

Optionally, the sensor is configured as a pressure sensor disposed in the guide groove, and the pressure sensor is disposed on a side of the sensing member facing the liquid inlet end of the tube head body.

Optionally, the sensing member is configured as a magnetic ring, the sensor is configured as a first magnetic switch and a second magnetic switch, the first magnetic switch and the second magnetic switch are arranged sequentially and spaced along the axial direction of the tube head body from the liquid inlet end to the liquid outlet end, and the first magnetic switch and the second magnetic switch are disposed on a side of the guide groove.

Optionally, an elastic member is disposed in the guide groove, and the elastic member is disposed on a side of the sensing member facing away from the liquid inlet end of the tube head body.

Optionally, a guide post is disposed in the guide groove, and the sensing member is sleeved on the guide post.

Optionally, the tube head body includes a liquid tube, a gas tube, and a thermal insulation layer covering the liquid tube and the gas tube; the liquid tube includes the liquid channel, and the gas tube includes the gas channel.

Optionally, a limiting member is disposed on the outer periphery of the tube head body, and the limiting member is configured to abut against the container.

The present application also provides an automatic injection device.

The device includes an injection tube, an electromagnetic valve, and the liquid injection tube head described in any one of the above.

The electromagnetic valve is disposed at a first end of the injection tube. The liquid injection tube head is disposed at a second end of the injection tube, and the sensor of the liquid injection tube head is electrically connected to the electromagnetic valve.

The present application also provides an automatic injection container.

The automatic injection container includes a container and the automatic injection device described above. The liquid injection tube head of the automatic injection device is inserted into the container.

The liquid injection tube head provided by the present application allows the liquid outlet end of the tube head body to be inserted into a container, and liquid is injected into the liquid channel from the liquid inlet end of the tube head body. Due to the angle α between the first gas channel and the liquid channel being smaller than or equal to 90°, liquid does not flow from the first gas channel into the second gas channel. When the liquid in the container does not cover the port of the second gas channel, as the liquid in the liquid channel flows past the port of the first gas channel, a pressure drop occurs at the port of the first gas channel, causing the gas in the gas channel to flow from the port of the second gas channel toward the port of the first gas channel. The flowing gas acts on the sensing member, which causes the sensor to emit a first signal, indicating that liquid is being injected into the liquid channel. When the liquid in the container covers the port of the second gas channel, the gas in the gas channel stops flowing, and after the sensing member is no longer affected by the flowing gas, the sensor is configured to sense the sensing member and emit a second signal, indicating that the container is full of liquid, thus effectively preventing liquid from overflowing from the container. Additionally, when no liquid is injected at the liquid inlet end of the tube head body, the sensor can sense the sensing member and emit a second signal to ensure that the sensing assembly functions normally, ensuring safe operation.

The automatic injection device provided by the present application controls the opening and closing of the electromagnetic valve through the first signal and the second signal emitted by the sensor to achieve the purpose of automatic injection, which is safe and reliable.

The automatic injection container provided by the present application achieves the purpose of automatic filling of the container through the configuration of the automatic injection device, ensuring safety and reliability.

### BRIEF DESCRIPTION OF DRAWINGS

FIG. 1 is a sectional view of a liquid injection tube head according to the present application.
FIG. 2 is an enlarged view of the structure of section C in FIG. 1 when a container is fully filled or when no liquid is injected according to the present application.
FIG. 3 is an enlarged view of the structure of section C in FIG. 1 when a container is not full during injection according to the present application.
FIG. 4 is a sectional view of an automatic injection container according to the present application.

### Reference list

- 100: tube head body
- 101: liquid tube
- 102: gas tube
- 103: thermal insulation layer
- 110: liquid channel
- 111: first liquid channel
- 112: second liquid channel
- 113: first conical channel
- 114: third liquid conical
- 115: second conical channel
- 120: gas channel
- 121: first gas channel
- 122: second gas channel
- 123: guide groove
- 1231: housing
- 130: limiting member
- 131: exhaust hole
- 140: guide post
- 200: sensing assembly
- 210: sensing element
- 211: magnetic ring
- 212: first sliding sleeve
- 213: second sliding sleeve
- 220: sensor
- 221: first magnetic switch
- 222: second magnetic switch
- 230: elastic element
- 300: injection tube
- 400: electromagnetic valve
- 500: controller
- 600: container
- 610: liquid injection hole

### DETAILED DESCRIPTION

In the description of the present application, unless otherwise expressly specified and limited, a term "connected to each other", "connected", or "secured" is to be construed in a broad sense, for example, as securely connected, detachably connected, or integrated; mechanically connected or electrically connected; directly connected to each other or indirectly connected to each other via an intermediary; or internally connected between two components or interaction relations between two components. For those of ordinary skill in the art, specific meanings of the preceding terms in the present application may be construed according to specific situations.

In the present application, unless otherwise expressly specified and limited, when a first feature is described as "above" or "below" a second feature, the first feature and the second feature may be in direct contact or be in contact via another feature between the two features instead of being in direct contact. Moreover, when the first feature is "on", "above", or "over" the second feature, the first feature is right on, above, or over the second feature, or the first feature is obliquely on, above, or over the second feature, or the first feature is simply at a higher level than the second feature. When the first feature is "under", "below", or "underneath" the second feature, the first feature is right under, below, or underneath the second feature, or the first feature is obliquely under, below, or underneath the second feature, or the first feature is simply at a lower level than the second feature.

In the description of the present application, it should be noted that orientations or position relations indicated by terms such as "above", "below", "right", and the like are based on orientations or position relations shown in the drawings. These orientations or position relations are intended only to facilitate and simplify the operation, and not to indicate or imply that a device or element referred to must have such specific orientations or must be configured or operated in such specific orientations. Thus, these orientations or position relations are not to be construed as limiting the present application. In addition, terms "first" and "second" are used only to distinguish between descriptions and have no special meaning.

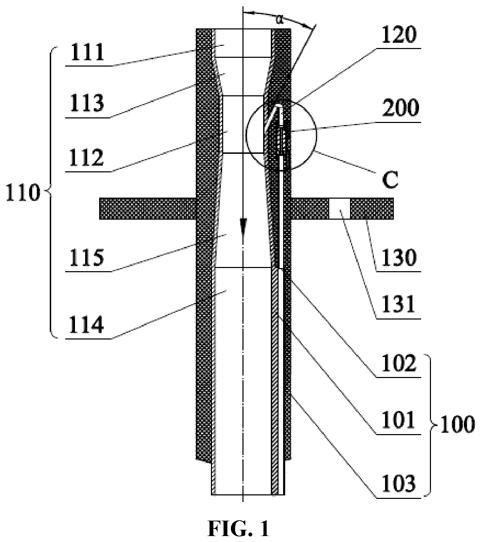

As shown in FIGS. 1 to 4, this embodiment provides a liquid injection tube head, including a tube head body 100 and a sensing assembly 200.

Specifically, the tube head body 100 includes a liquid channel 110 and a gas channel 120, a liquid outlet end of the tube head body 100 is configured to be inserted into a container 600, the liquid channel 110 extends along an axial direction of the tube head body 100 and penetrates a liquid inlet end and the liquid outlet end of the tube head body 100. The gas channel 120 includes a first gas channel 121 and a second gas channel 122 that are in communication with each other. The angle α between the first gas channel 121 and the liquid channel 110 is ≤ 90°. The port of the first gas channel 121 communicates with a peripheral portion of the liquid channel 110, and the second gas channel 122 extends along the tube head body 100 and penetrates the liquid outlet end of the tube head body 100. A guide groove 123 extending along the axial direction of the tube head body 100 is disposed on the second gas channel 122. The sensing assembly 200 includes a sensing member 210 slidably disposed in the guide groove 123 and a sensor 220 disposed on the tube head body 100.

In the case where liquid is injected into the liquid channel 110 and the liquid in the container 600 does not cover the port of the second gas channel 122, gas in the gas channel 120 flows from the port of the second gas channel 122 toward the port of the first gas channel 121, and the flowing gas causes the sensor 220 to sense the sensing member 210 and emit a first signal.

In the case where liquid is injected into the liquid channel 110 and liquid in the container 600 covers the port of the second gas channel 122, or when no liquid is injected into the liquid channel 110, the sensor 220 is configured to sense the sensing member 210 and emit a second signal.

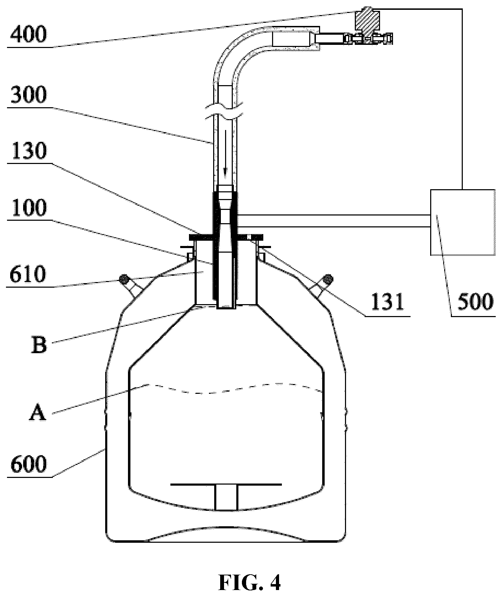

In this embodiment, the liquid outlet end of the tube head body 100 is configured to be inserted into the container 600, and then liquid is injected into the liquid channel 110 from the liquid inlet end of the tube head body 100, that is, liquid is injected through the liquid inlet of the liquid channel 110. In the figures, the arrow indicates the direction of the flowing direction of the liquid. Because the angle α between the first gas channel 121 and the liquid channel 110 is ≤ 90°, the liquid does not flow from the first gas channel 121 to the second gas channel 122. When the liquid in the container 600 does not cover the port of the second gas channel 122, for example, at the position of the liquid level A in FIG. 4, when the liquid in the liquid channel 110 flows past the port of the first gas channel 121, a pressure drop occurs at the port of the first gas channel 121 due to the Venturi effect. The pressure in the second gas channel 122 is greater than the pressure in the first gas channel 121, causing the gas in the gas channel 120 to flow from the port of the second gas channel 122 toward the port of the first gas channel 121. The flowing gas acts on the sensing element 210, allowing the sensor 220 to emit the first signal, indicating that liquid is being injected into the liquid channel 110. When the liquid in the container 600 covers the port of the second gas channel 122, as shown by the liquid level B in FIG. 4, the liquid blocks the second gas channel 122. The pressure in the second gas channel 122 becomes equal to the pressure in the first gas channel 121, and the gas in the gas channel 120 stops flowing. After the sensing element 210 is no longer affected by the flowing gas, the sensor 220 detects the sensing element 210 and emits a second signal, indicating that the container 600 is full of liquid, thus effectively preventing liquid from overflowing from the container 600. Additionally, when no liquid is injected at the liquid inlet end of the tube head body 100, the sensor 220 can sense the sensing member 210 and emit a second signal to ensure that the sensing assembly 220 functions normally, ensuring safe operation. Moreover, the structure of the liquid injection tube head is simple, and the manufacturing cost is low.

Illustratively, the liquid injected into the container 600 through the liquid injection tube head includes, but is not limited to, liquid nitrogen and liquid hydrogen. It is worth noting that the liquid injection tube head is suitable for injecting liquid nitrogen in a gas-liquid mixed state.

Illustratively, the liquid injection tube head may be applied to an aluminum liquid nitrogen tank or other liquid storage containers.

In a feasible embodiment, in the axial direction of the tube head body 100, the port of the gas channel 120 protrudes beyond the liquid outlet of the liquid channel 110, or the port of the gas channel 120 is flush with the liquid outlet of the liquid channel 110 to prevent liquid from overflowing from the container 600.

In a feasible embodiment, a limiting member 130 is disposed on the outer periphery of the tube head body 100, and the limiting member130 is configured to abut against the container 600 to limit the depth of insertion of the tube head body 100 into the container 600, thus determining the stop position for liquid injection into the container 600. The container 600 is provided with a liquid injection hole 610. The limiting member 130 abuts against the liquid injection hole 610 to reduce or prevent gas from escaping between the limiting member 130 and the liquid injection hole 610. When liquid is injected into the liquid channel 110 from the liquid inlet end of the tube head body 100, the gas pressure in the container 600 increases, and the gas in the container 600 is better forced into the second gas channel 122 and flows toward the first gas channel 121.

Illustratively, the limiting member 130 is adjustable in the axial direction of the tube head body 100. Specifically, the limiting member 130 may be set as an annular or T-shaped sleeve and may be connected to the tube head body 100 by threaded connection.

Illustratively, to ensure that gas in the container 600 can be discharged during liquid injection without affecting the gas entering from the second gas channel 122 and flowing toward the first gas channel 121, an exhaust hole 131 may be disposed on the limiting member 130. Optionally, a one-way exhaust valve may be disposed on the exhaust hole 131.

In this embodiment, as shown in FIG. 1, the liquid channel 110 includes a first liquid channel 111 and a second liquid channel 112 sequentially from the liquid inlet end to the liquid outlet end, the cross section of the first liquid channel 111 is greater than the cross section of the second liquid channel 112, and the port of the first gas channel 121 communicates with a peripheral portion of the second liquid channel 112. In this embodiment, when liquid flows from the first liquid channel 111 to the second liquid channel 112, the liquid in the second liquid channel 112 accelerates the flow. According to Bernoulli's principle and the Venturi effect, the increase in flow velocity is accompanied by a decrease in fluid pressure, making it more suitable for the gas in the gas channel 120 to flow from the port of the second gas channel 122 toward the port of the first gas channel 121. Thus, the flowing gas more stably acts on the sensing element 210, and the sensor 220 stably emits the first signal.

Illustratively, the transition between the first liquid channel 111 and the second liquid channel 112 may be smooth to ensure the stability of the liquid flow in the liquid channel 110.

Illustratively, the transition between the first liquid channel 111 and the second liquid channel 112 may be achieved through a first conical channel 113.

In a feasible embodiment, the liquid channel 110 also includes a third liquid channel 114 that communicates with the second liquid channel 112. The cross section of the third liquid channel 114 is larger than the cross section of the second liquid channel 112, reducing the liquid flow velocity and effectively preventing splashing of the liquid injected into the container 600. It can be understood that the first liquid channel 111, the second liquid channel 112, and the third liquid channel 114 are connected in sequence in the axial direction of the tube head body 100.

Illustratively, the transition between the second liquid channel 112 and the third liquid channel 114 may be smooth to ensure the stability of the liquid flow in the liquid channel 110.

Illustratively, the transition between the second liquid channel 112 and the third liquid channel 114 may be achieved through a second conical channel 115.

Optionally, the cross section of the first liquid channel 111 is equal to the cross section of the third liquid channel 114, and the length of the first conical channel 113 along the axial direction of the tube head body 100 is shorter than the length of the second conical channel 115 along the axial direction of the tube head body 100, so as to reduce energy loss of the liquid flowing through the second liquid channel 112 and allow the liquid to flow more smoothly into the third liquid channel 114. Moreover, splashing of the liquid injected into the container 600 is effectively prevented.

In some embodiments, the sensor 220 is configured as a pressure sensor (not shown) disposed in the guide groove 123, and the pressure sensor is disposed on a side of the sensing member 210 facing the liquid inlet end of the tube head body 100. In this embodiment, when gas in the gas channel 120 flows from the port of the second gas channel 122 toward the port of the first gas channel 121, the flowing gas lifts the sensing element 210, causing the sensing element 210 to tend to move away from the pressure sensor or disengage from the pressure sensor. This reduces the force exerted by the sensing element 210 on the pressure sensor, allowing the pressure sensor to emit the first signal, which is stable and reliable. When liquid blocks the port of the second gas channel 122 or when no liquid is injected into the liquid channel 110, the sensing element 210, under the influence of its own weight, acts on the pressure sensor, and the pressure sensor sends a second signal.

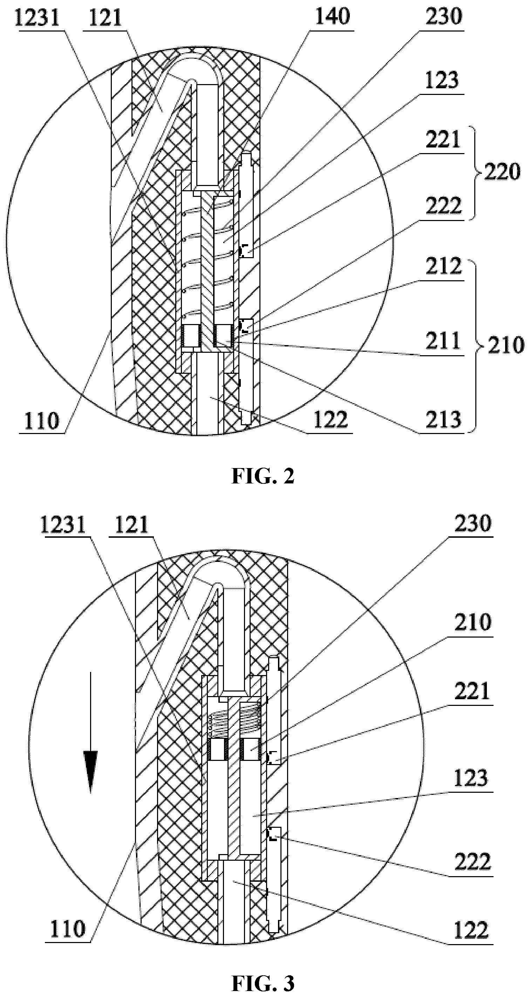

In some embodiments, as shown in FIGS. 2 and 3, the sensing member 210 is configured as a magnetic ring 211, the sensor 220 is configured as a first magnetic switch 221 and a second magnetic switch 222, the first magnetic switch 221 and the second magnetic switch 222 are arranged sequentially and spaced along the axial direction of the tube head body 100 from the liquid inlet end to the liquid outlet end, and the first magnetic switch 221 and the second magnetic switch 222 are disposed on a side of the guide groove 123. In this embodiment, when the gas in the gas channel 120 flows from the port of the second gas channel 122 toward the port of the first gas channel 121, the flowing gas lifts the sensing element 210 to slide to a position opposite to the first magnetic switch 221, as shown in FIG. 3, and the first magnetic switch 221 sends a first signal; when liquid blocks the port of the second gas channel 122 or when no liquid is injected into the liquid channel 110, as shown in FIG. 2, the sensing element 210 relies on its own weight to be opposite to the second magnetic switch 222, and the second magnetic switch 222 sends a second signal.

Illustratively, a gap is formed between the sensing element 210 and the guide groove 123. It can be understood that the sensing element 210 and the guide groove 123 may have a shaft-hole clearance fit. When liquid blocks the port of the second gas channel 122 or when no liquid is injected into the liquid channel 110, the sensing element 210 may be located at one end of the guide groove 123 facing the liquid outlet end of the tube head body 100.

Of course, the sensor assembly 200 may take other structural forms, which are not limited by the present application.

In this embodiment, as shown in FIGS. 2 and 3, to ensure that the sensing element 210 slides stably and reliably in the guide groove123, a guide post 140 is disposed in the guide groove 123, and the sensing member 210 is sleeved on the guide post 140. A gap may also be formed between the sensing element 210 and the guide post 140. It can be understood that the sensing element 210 and the guide post 140 may have a shaft-hole clearance fit.

Illustratively, to reduce the sliding friction between the sensing element 210 and the groove wall of the guide groove 123, a first sliding sleeve 212 is disposed around the magnetic ring 211. The magnetic ring 211 makes sliding contact with the guide groove 123 via the first sliding sleeve 212. Optionally, the material of the first sliding sleeve 212 may be polytetrafluoroethylene, PEEK, POM, ultra-high-molecular-weight polyethylene, or other composite materials with good self-lubricating properties.

Illustratively, to reduce the sliding friction between the sensing element 210 and the guide post 140, a second sliding sleeve 213 is disposed in the magnetic ring 211. The magnetic ring 211 makes sliding contact with the guide post 140 via the second sliding sleeve 213. Optionally, the material of the second sliding sleeve 213 may be polytetrafluoroethylene, PEEK, POM, ultra-high-molecular-weight polyethylene, or other composite materials with good self-lubricating properties.

In this embodiment, with continued reference to FIG. 2 and FIG. 3, to ensure the accuracy of the signals emitted by the sensor 220, an elastic member 230 is disposed in the guide groove 123, and the elastic member 230 is disposed on a side of the sensing member 210 facing away from the liquid inlet end of the tube head body 100. The elastic element 230 gives the sensing element 210 a constant tendency to slide toward the liquid outlet end of the tube head body 100. When the gas in the gas channel 120 stops flowing, the sensing member 210 can be quickly reset to the end of the guide groove 123 facing the liquid outlet end of the tube head body 100 to improve the response speed of the sensor 220.

Illustratively, the elastic element 230 may be a spring.

In this embodiment, as shown in FIG. 1, the tube head body 100 includes a liquid tube 101, a gas tube 102, and a thermal insulation layer 103 covering the liquid tube 101 and the gas tube 102 to improve safety. The liquid tube 101 includes the liquid channel 110, and the gas tube 102 includes the gas channel 120. When the liquid is liquid nitrogen, evaporation of the liquid nitrogen can be reduced, thereby enhancing the Venturi effect.

Illustratively, the guide groove 123 may be formed by the enclosure of a housing 1231 so that the sensing element 210 can be placed in the guide groove123, and the assembly and molding of the liquid injection tube head are facilitated. The housing 1231 is disposed in the thermal insulation layer 103.

It is worth mentioning that the cross section of one end of the port of the second gas channel 122 is greater than or equal to the cross section of the junction where the second gas channel 122 communicates with the guide groove 123. When liquid is injected into the liquid channel 110 from the liquid inlet end of the tube head body 100, the gas in the container 600 is forced to enter the second gas channel 122 better and flow toward the first gas channel 121. The port of the second gas channel 122 may be formed by the enclosure of the thermal insulation layer 103 and the liquid tube 101.

This embodiment also provides an automatic injection device. As shown in FIGS. 1 to 4, the automatic injection device includes an injection tube 300, an electromagnetic valve 400, and the preceding liquid injection tube head. The electromagnetic valve 400 is disposed at a first end of the injection tube 300, the liquid injection tube head is disposed at a second end of the injection tube 300, and the sensor 220 of the liquid injection tube head is electrically connected to the electromagnetic valve 400. The opening and closing of the electromagnetic valve 400 are controlled by the first signal and second signal emitted by the sensor 220, thereby achieving the purpose of automatic injection and ensuring safety and reliability.

Illustratively, the automatic injection device may be detachably connected to the container 600, that is, one automatic injection device can be used to refill multiple containers 600 by swapping between the multiple containers 600.

Illustratively, the injection tube 300 may be a vacuum tube. Liquid nitrogen injection is used as an example. The vacuum interlayer structure of the vacuum tube can effectively reduce the loss of liquid nitrogen.

Specifically, the automatic injection device also includes a controller 500. The electromagnetic valve 400 is electrically connected to the sensor 220 through the controller 500. When the container 600 needs to be injected with liquid, the electromagnetic valve 400 is opened manually or by the controller 500. The liquid passes through the electromagnetic valve 400, the injection tube 300, and the liquid injection tube head in sequence to enter the container 600. During the process of injecting the container 600 with liquid, if liquid flows through the liquid injection tube head and does not cover the port of the second gas channel, the sensor 220 sends a first signal to the controller 500, the controller 500 can display the signal that the liquid is being injected through the upper computer, indicator light, and other components, and the electromagnetic valve 400 remains in an open state. When the liquid covers the port of the second gas channel, the controller 500 receives a second signal from the sensor 220 and controls the electromagnetic valve 400 to close, completing the liquid injection. Additionally, if the electromagnetic valve 400 remains open for a period of time and the controller 500 does not receive the first signal sent by the sensor 220, the controller 500 may issue an alarm signal through the upper computer, indicator light, buzzer, and other components and control the electromagnetic valve 400 to close, enhancing safety.

This embodiment also provides an automatic injection container. As shown in FIGS. 1 to 4, the automatic injection container includes a container 600 and the preceding automatic injection device. The liquid injection tube head of the automatic injection device is inserted into the container 600. The setup of the automatic injection device achieves the purpose of automatic injection of the container 600, which is safe and reliable.

It is worth mentioning that a liquid level sensor (not shown) and/or a temperature sensor (not shown) may be arranged in the container 600. Illustratively, when the liquid level in the container 600 falls below the liquid level A shown in FIG. 4, the liquid level sensor and/or temperature sensor may send an injection signal to the controller 500, and the controller 500 controls the electromagnetic valve 400 to open.

## Claims

1. A liquid injection tube head, comprising:
a tube head body (100), wherein the tube head body comprises a liquid channel (110) and a gas channel (120), a liquid outlet end of the tube head body (100) is configured to be inserted into a container (600), the liquid channel (110) extends along an axial direction of the tube head body (100) and penetrates a liquid inlet end and the liquid outlet end of the tube head body (100), the gas channel (120) comprises a first gas channel (121) and a second gas channel (122) that are in communication with each other, an angle α between the first gas channel (121) and the liquid channel (110) is smaller than or equal to 90°, a port of the first gas channel (121) communicates with a peripheral portion of the liquid channel (110), the second gas channel (122) extends along the axial direction of the tube head body (100) and penetrates the liquid outlet end of the tube head body (100), and a guide groove (123) extending along the axial direction of the tube head body (100) is disposed on the second gas channel (122); and
a sensing assembly (200), comprising a sensing member (210) slidably disposed in the guide groove (123) and a sensor (220) disposed on the tube head body (100);
wherein in a case where liquid is injected into the liquid channel (110) and liquid in the container (600) does not cover a port of the second gas channel (122), gas in the gas channel (120) flows from the port of the second gas channel (122) toward the port of the first gas channel (121), and the flowing gas causes the sensor (220) to sense the sensing member (210) and emit a first signal; and
in a case where liquid is injected into the liquid channel (110) and liquid in the container (600) covers the port of the second gas channel (122), or when no liquid is injected into the liquid channel (110), the sensor (220) is configured to sense the sensing member (210) and emit a second signal.

2. The liquid injection tube head of claim 1, wherein the liquid channel (110) comprises a first liquid channel (111) and a second liquid channel (112) sequentially from the liquid inlet end to the liquid outlet end, a cross section of the first liquid channel (111) is greater than a cross section of the second liquid channel (112), and the port of the first gas channel (121) communicates with a peripheral portion of the second liquid channel (112).

3. The liquid injection tube head of claim 1, wherein the sensor (220) is configured as a pressure sensor disposed in the guide groove (123), and the pressure sensor is disposed on a side of the sensing member (210) facing the liquid inlet end of the tube head body (100).

4. The liquid injection tube head of claim 1, wherein the sensing member (210) is configured as a magnetic ring (211), the sensor (220) is configured as a first magnetic switch (221) and a second magnetic switch (222), the first magnetic switch (221) and the second magnetic switch (222) are arranged sequentially and spaced along the axial direction of the tube head body (100) from the liquid inlet end to the liquid outlet end, and the first magnetic switch (221) and the second magnetic switch (222) are disposed on a side of the guide groove (123).

5. The liquid injection tube head of claim 1, wherein an elastic member (230) is disposed in the guide groove (123), and the elastic member (230) is disposed on a side of the sensing member (210) facing away from the liquid inlet end of the tube head body (100).

6. The liquid injection tube head of claim 1, wherein a guide post (140) is disposed in the guide groove (123), and the sensing member (210) is sleeved on the guide post (140).

7. The liquid injection tube head of claim 1, wherein the tube head body (100) comprises a liquid tube (101), a gas tube (102), and a thermal insulation layer (103) covering the liquid tube (101) and the gas tube (102); wherein
the liquid tube (101) comprises the liquid channel (110), and the gas tube (102) comprises the gas channel (120).

8. The liquid injection tube head of claim 1, wherein a limiting member (130) is disposed on an outer periphery of the tube head body (100), and the limiting member (130) is configured to abut against the container (600).

9. An automatic injection device, comprising:
an injection tube (300);
an electromagnetic valve (400) disposed at a first end of the injection tube (300); and
the liquid injection tube head of any one of claims 1 to 8, wherein the liquid injection tube head is disposed at a second end of the injection tube (300), and the sensor (220) of the liquid injection tube head is electrically connected to the electromagnetic valve (400).

10. An automatic injection container, comprising:
a container (600); and
the automatic injection device of claim 9, wherein the liquid injection tube head of the automatic injection device is inserted into the container (600).
